# EUROPÄISCHE PATENTANMELDUNG

(11) **EP 0 837 093 A2**
(43) Veröffentlichungstag der Anmeldung: **22.04.1998**
(21) Anmeldenummer: 97117563.3
(22) Anmeldetag: 10.10.1997
(51) Int. Cl.: C08J 11/24, C08G 18/50

(54) **Verfahren zur Herstellung von zähelastischen Polyurethan-Integralschaumstoffen mit verbesserter Weiterreissfestigkeit, Bruchdehnung und Zugfestigkeit**

(30) Priorität: 18.10.1996 DE 19643056
(71) Anmelder: BASF AKTIENGESELLSCHAFT, 67056 Ludwigshafen (DE)
(72) Erfinder: Naber, Bernhard, 01987 Schwarzheide (DE); Gassan, Michael, 01968 Senftenberg (DE); Hendreich, Regina, 01945 Frauendorf (DE); Neiss, Vera, 01987 Schwarzheide (DE)

(57) **Zusammenfassung**

Die Erfindung betrifft ein Verfahren zur Herstellung von zähelastischen Polyurethan-Integralschaumstoffen mit verbesserter Weiterreißfestigkeit, Bruchdehnung und Zugfestigkeit durch Umsetzung von
a) organischen und/oder modifizierten organischen Polyisocyanaten mit
b mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Katalysatoren,
e) gegebenenfalls Treibmitteln
f) sowie gegebenenfalls weiteren Hilfsmitteln und/oder Zusatzstoffen,
das dadurch gekennzeichnet ist, daß als Komponente b) mindestens ein Recyclatpolyol, welches durch Glykolyse von zähelastischen Polyurethan-Integralschaumstoffen unter Verwendung von Glycidethern entsteht, eingesetzt wird.

Weiterhin betrifft die Erfindung die nach diesem Verfahren hergestellten zähelastischen Polyurethan-Integralschaumstoffe sowie deren Verwendung zur Bierfaßumhüllung.

## Beschreibung

Die Erfindung betrifft ein Verfahren zur Herstellung von zähelastischen Polyurethan-Integralschaumstoffen mit verbesserter Weiterreißfestigkeit, Bruchdehnung und Zugfestigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Katalysatoren,
e) gegebenenfalls Treibmitteln
f) sowie gegebenenfalls weiteren Hilfsmitteln und/oder Zusatzstoffen.

Die Erfindung betrifft weiterhin die nach diesem Verfahren hergestellten zähelastischen Polyurethan-Integralschaumstoffe sowie deren Verwendung als Bierfaßumhüllung.

Die Herstellung von zähelastischen Polyurethan-Integralschaumstoffen durch Umsetzung von organischen Polyisocyanaten und/oder modifizierten organischen Polyisocyanaten mit höherfunktionellen Verbindungen mit mindestens zwei reaktiven Wasserstoffatomen und gegebenenfalls niedermolekularen Kettenverlängerungs- und/oder Vernetzungsmitteln in Gegenwart von Katalysatoren, Treibmitteln, Hilfsmitteln und/oder Zusatzstoffen ist bekannt und wurde vielfach beschrieben. Eine zusammenfassende Übersicht über die Herstellung von Polyurethan-Integralschaumstoffen wird z.B. im Kunststoff-Handbuch, Band VII, "Polyurethane", 1. Auflage 1966, herausgegeben von Dr. R. Vieweg und Dr. A. Höchtlen, und 3. Auflage 1993, herausgegeben von Becker/Braun (Carl Hanser Verlag, München) gegeben.

Es ist ebenfalls bekannt, daß für die Herstellung von Polyurethanschaumstoffen Polyole eingesetzt werden können, die ihrerseits aus Polyurethanabfällen durch Umsetzung mit mindestens 2 OH-Gruppen enthaltenden Verbindungen, die sogenannte Glykolyse, erhalten wurden. So beschreibt beispielsweise DE-A-25 16 863 die Herstellung eines Polyolgemisches aus Polyurethanabfällen und aliphatischen Diolen, das für die Herstellung von Polyurethanhartschaumstoffen geeignet ist. Nach DE-A-40 24 601 wird aus Polyurethanharnstoffabfällen durch Glykolyse eine polyolhaltige Dispersion erhalten, die zur Herstellung von harten oder halbharten Polyurethanen oder Polyurethanharnstoffen eingesetzt werden kann. Gemäß US 4.014.809 (DE-A-25 57 172) werden aus Polyurethanhartschaumstoffen synthetisierte polyolhaltige flüssige Gemische als Hartschaumkomponente wiederverwendet. Polyolhaltige Flüssigkeiten, hergestellt nach DE-A-37 02 495 aus Polyurethanabfällen, werden als für halbharte und harte Polyurethane, insbesondere Polyurethanschaumstoffe, geeignet beschrieben.

Die nach den genannten Verfahren hergestellten Recyclatpolyole enthalten in jedem Fall die bei der Glykolyse ebenfalls entstehenden Amine, die gesundheitsgefährdend sind und sich außerdem störend in den aus den Recyclatpolyolen formulierten Polyurethan-Systemen auswirken. Sie beschleunigen die Reaktion der Polyurethanbildung stark, bilden starre Harnstoffgruppen und vermindern die Steuerbarkeit der Polyurethanbildungsreaktion durch andere Katalysatoren. Weiterhin führt der Gehalt an freien Aminen in Polyolkomponenten von Polyurethansystemen im Kontakt mit Isocyanaten sofort zu hochthixotropen Massen, wie die Patentschrift DD-A-156 480 lehrt.

Auf dem Gebiet der Entaminierung sind eine Reihe verschiedener Verfahren bekannt geworden. Das gemäß DE-A-40 24 601 durch Zusatz von monomerer Acrylsäure entaminierte Recyclatpolyol weist eine Säurezahl von deutlich über 1 mg KOH/g auf, was zu Schwierigkeiten in den das Recyclatpolyol enthaltenden Polyurethansystemen führen kann. Weiterhin stört der deutliche Geruch nach Acrylsäure. Nach DE-A-44 16 322 können auch niedermolekulare Harnstoffe und/oder Carbamidsäureester zur Entaminierung verwendet werden. In EP-A-0 592 952 wird der Einsatz von Glycidethern zur Herstellung von aminarmen Recyclatpolyolen beschrieben.

Die so erhaltenen Recyclatpolyole werden für die Herstellung von halbharten und harten Polyurethanschaumstoffen eingesetzt. Eine Verbesserung der Qualität der Polyurethanschaumstoffe durch den Einsatz dieser Recyclatpolyole ist aus den Schriften nicht ersichtlich. Nur DE-A-44 11 864 beschreibt, daß durch den Einsatz von Recyclatpolyol, hergestellt durch Glykolyse von Weichschaumabfällen unter Verwendung von Glycidethern, harte Polyurethanschaumstoffe mit erhöhtem Anteil an offenen Zellen und vermindertem Schrumpf hergestellt werden können.

An zähelastische Polyurethan-Integralschaumstoffe werden bezüglich der mechanischen Eigenschaften hohe Anforderungen gestellt. Neben der Ausbildung bestimmter Zellstrukturen gilt es, ein anspruchsvolles mechanisches Eigenschaftsniveau der Schaumstoffe zu erreichen. Besonders kommt es dabei auf möglichst hohe Weiterreißfestigkeit, Bruchdehnung und Zugfestigkeit an, insbesondere wenn, wie das beispielsweise bei Bierfaßumhüllungen der Fall ist, starke äußere Kräfte auf das Polyurethanmaterial einwirken.

Der vorliegenden Erfindung lag deshalb die Aufgabe zugrunde, ein einfaches und kostengünstiges Verfahren zur Herstellung von zähelastischen Polyurethan-Integralschaumstoffen mit verbesserter Weiterreißfestigkeit, Bruchdehnung und Zugfestigkeit zu entwickeln.

Überraschenderweise wurde gefunden, daß diese Aufgabe dadurch gelöst werden kann, daß bei der Herstellung der zähelastischen Polyurethan-Integralschaumstoffe ein Recyclatpolyol, welches durch Glykolyse von zähelastischen Polyurethan-Integralschaumstoffen unter Verwendung von Glycidethern entsteht, eingesetzt wird.

Gegenstand der Erfindung ist demzufolge ein Verfahren zur Herstellung von zähelastischen Polyurethan-Integralschaumstoffen mit verbesserter Weiterreißfestigkeit, Bruchdehnung und Zugfestigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Katalysatoren,
e) gegebenenfalls Treibmitteln
f) sowie gegebenenfalls weiteren Hilfsmitteln und/oder Zusatzstoffen,
das dadurch gekennzeichnet ist, daß als Komponente b) mindestens ein Recyclatpolyol, welches durch Glykolyse von zähelastischen Polyurethan-Integralschaumstoffen unter Verwendung von Glycidethern entsteht, eingesetzt wird.

Gegenstände der Erfindung sind weiterhin die nach diesem Verfahren hergestellten zähelastischen Polyurethan-Integralschaumstoffe sowie deren Verwendung als Bierfaßumhüllung.

Es war überraschend und in keiner Weise vorhersehbar, daß bei Einsatz von aus zähelastischen Polyurethan-Integralschaumstoffen durch Glykolyse hergestellten Recyclatpolyolen wieder hochwertige zähelastische Polyurethan-Integralschaumstoffe entstehen, die eine verbesserte Weiterreißfestigkeit, Bruchdehnung und Zugfestigkeit aufweisen. Es wäre vielmehr zu erwarten gewesen, daß sich bei Einsatz von Recyclatpolyolen die mechanischen Eigenschaften des Schaumstoffes verschlechtern würden.

Es wurde somit ein wirtschaftliches Verfahren zur Herstellung von zähelastischen Polyurethan-Integralschaumstoffen, die sich hervorragend zur Bierfaßumhüllung eignen, gefunden.

Als höhermolekulare Verbindungen mit mindestens zwei reaktiven Wasserstoffatomen werden erfindungsgemäß ganz oder teilweise Recyclatpolyole allein oder im Gemisch miteinander eingesetzt. Vorteilhafterweise werden zur Erzielung der gewünschten mechanischen Kennwerte Recyclatpolyole in einem Anteil von mindestens 30 Gew.-%, bezogen auf die Gesamtmenge der Komponente b), verwendet. Aus wirtschaftlichen Gründen kann der Einsatz der Recyclatpolyole wesentlich über 30 Gew.-% liegen bzw. die Komponente b) vollständig aus Recyclatpolyol bestehen. Natürlich können auch weniger als 30 Gew.-% Recyclatpolyole verwendet werden.

Die Recyclatpolyole werden durch Glykolyse von zähelastischen Polyurethan-Integralschaumstoffen, insbesondere deren Abfällen, mit kurzkettigen, hydroxylgruppenhaltigen Verbindungen, wie z.B. Ethylenglykol, Diethylenglykol, Triethylenglykol, Oligoethylenglykole, Propylenglykol, Dipropylenglykol, Tripropylenglykol, Oligopropylenglykole, Butandiole, Neopentylglykol, Glycerol, Ethanolamin, Diethanolamin und Triethanolamin, gegebenenfalls in Anwesenheit von Katalysatoren, wie beispielsweise Alkalimetallsalzen kurzkettiger Fettsäuren, Titanaten, Stannaten und Antimonaten, bei höheren Temperaturen erhalten.

Als zähelastische Polyurethan-Integralschaumstoffe werden insbesondere Polyurethanabfälle eingesetzt, wie sie beispielsweise besonders bei der Produktion von Bierfaßumhüllungen anfallen, wobei diese unter anderem Füllstoffe oder Verstärkungsmittel enthalten können, die das Verfahren nicht stören.

Die erfindungsgemäß einzusetzenden Recyclatpolyole sind vorzugsweise aminarm. Sie sind insbesondere dadurch erhältlich, daß die Glykolyse der Polyurethan-Integralschaumstoffe in der Weise durchgeführt wird, daß über den gesamten Verlauf der Reaktion mono- und/oder difunktionelle Glycidether zudosiert werden, wie es in EP-A-0 592 952 beschrieben ist.

Bei der Herstellung der Recyclatpolyole sind handelsübliche Glycidether einsetzbar, die eine oder zwei Epoxidgruppen im Molekül enthalten.

Als besonders geeignet erwiesen sich die monofunktionellen Glycidether der allgemeinen Formel (I) 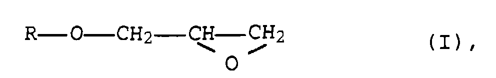 in der R = Phenyl, Cyclohexyl, Methylcyclohexyl, Benzyl, i-Propyl, i-Butyl oder methyl- und/oder ethylverzweigte Kohlenwasserstoffketten mit 5 bis 10 C-Atomen in der geraden Kette und/oder eine Gruppe der allgemeinen Formel 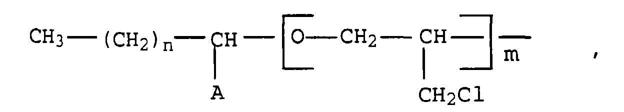 worin A ein Alkylrest mit 1 bis 8 Kohlenstoffatomen ist, n die Werte 3 bis 12 und m die Werte 1 bis 6 annehmen kann, bedeutet.

Bevorzugt eingesetzt werden 2-Ethylhexylglycidether oder ein Gemisch aus
50 bis 85 Gew.-% 2-Ethylhexylglycidether,
10 bis 35 Gew.-% einer oder mehrerer Verbindungen der Struktur 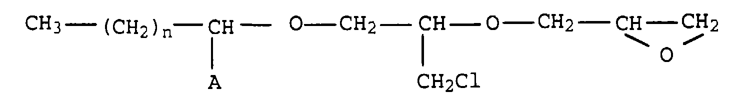 und
5 bis 20 Gew.-% einer oder mehrerer Verbindungen der Struktur 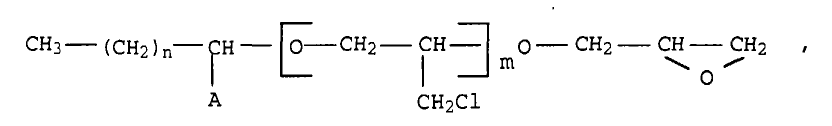 wobei A ein Alkylrest mit 1 bis 8 Kohlenstoffatomen ist, n die Werte 3 bis 12 und m die Werte 2 bis 6 annahmen kann. Dieses Glycidylethergemisch kann in bekannter Weise aus 2-Ethylhexanol und Epichlorhydrin, wie es bei der Synthese von 2-Ethylhexylglycidether anfällt, hergestellt und als technisches Rohprodukt, lediglich von anorganischen Bestandteilen befreit, das heißt ohne Einschaltung eines Destillationsschrittes, eingesetzt werden.

Als geeignet erwiesen sich weiterhin die difunktionellen Glycidether der allgemeinen Formel 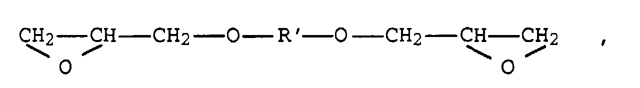 in der R' = Diphenylmethylen, 2,2-Diphenylpropylen (Bisphenol A), unverzweigte Kohlenwasserstoffketten mit 4 bis 10 C-Atomen oder methyl- und/oder ethylverzweigte Kohlenwasserstoffketten mit 4 bis 8 C-Atomen in der geraden Kette bedeutet.

Als Glycidether können monofunktionelle Glycidether der allgemeinen Formel (I) allein oder in Mischung miteinander, difunktionelle Glycidether der allgemeinen Formel (II) allein oder in Mischung miteinander oder Mischungen von einzelnen oder mehreren mono- und difunktionellen Glycidethern eingesetzt werden.

Die Reaktionstemperatur wird üblicherweise zwischen 180°C und 250°C, vorzugsweise zwischen 200°C und 235°C eingestellt.

Die Reaktionszeit liegt in Abhängigkeit von der Vernetzungsdichte der eingesetzten Polyurethane und/oder Polyharnstoffpolyurethane im allgemeinen bei 2 bis 6 Stunden, vorzugsweise 3 bis 5 Stunden.

Vorteilhafterweise werden die Glycidether über die gesamte Reaktionszeit, vorzugsweise gleichmäßig, dem aus Polyurethan-Integralschaumstoffen und OH-Gruppen enthaltenden Verbindungen bestehenden Ansatz in einer Menge von üblicherweise 5 Gew.% bis 20 Gew.%, bezogen auf den Gesamtansatz, zugegeben.

Zur Herstellung der zähelastischen Polyurethan-Integralschaumstoffe nach dem erfindungsgemäßen Verfahren finden, neben den oben beschriebenen Recyclatpolyolen, die an sich bekannten Aufbaukomponenten Verwendung, zu denen im einzelnen folgendes auszuführen ist:
a) Als organische und/oder modifizierte organische Polyisocyanate (a) kommen die an sich bekannten aliphatischen, cycloaliphatischen, araliphatischen und vorzugsweise die aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, hergestellt beispielsweise durch Umsetzung mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethylen-glykole, -triole und/oder -tetrole. Geeignet sind auch NCO-Gruppen enthaltende Prepolymere mit NCO-Gehalten von 30 bis 15 Gew.%, vorzugsweise von 28 bis 20 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt haben sich als organische Polyisocyanate aromatische Polyisocyanate und kommen daher vorzugsweise zur Anwendung: Roh-MDI, Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.
b) Als höhermolekulare Verbindungen mit mindestens zwei reaktiven Wasserstoffatomen werden erfindungsgemäß die oben beschrieben Recyclatpolyole eingesetzt. Daneben können weitere höhermolekulare Verbindungen mit mindestens zwei reaktiven Wasserstoffatomen (b) mitverwendet werden. Hierfür kommen zweckmäßigerweise solche mit einer Funktionalität von 2 bis 8, vorzugsweise 2 bis 6, und einem Molekulargewicht von 1000 bis 8000, vorzugsweise von 1200 bis 6000 in Betracht. Bewährt haben sich z.B. Polyether-polyamine und/oder vorzugsweise Polyole ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 25 bis 850 und vorzugsweise 300 bis 750.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
   Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlendioxid, Helium, Argon u.a., in der Schmelze bei Temperaturen von 150 bis 250°C, vorzugsweise 180 bis 220°C gegebenenfalls unter verminderten Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyesterpolyole besitzen vorzugsweise eine Funktionalität von 2 bis 4, insbesondere 2 bis 3, und ein Molekulargewicht von 480 bis 3000, vorzugsweise 1200 bis 3000 und insbesondere 1800 bis 2500.
   Insbesondere als Polyole verwendet werden jedoch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyetherpolyole, vorzugsweise Polyoxyoropylen- und Polyoxypropylen-polyoxyethylen-polyole, besitzen eine Funktionalität von vorzugsweise 2 bis 6 und insbesondere 2 bis 4 und Molekulargewichte von 1000 bis 8000, vorzugsweise 1200 bis 6000 und insbesondere 1800 bis 4000 und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%. vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US 4 374 209 und DE-A-32 31 497.
   Die Polyetherpolyole können ebenso wie die Polyesterpolyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die elastischen Polyurethan-Integralschaumstoffe können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethan-Integralschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.
d) Als Katalysatoren (d) zur Herstellung der zähelastischen Polyurethan-Integralschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin,Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
e) Zu Treibmitteln (e), welche zur Herstellung der Polyurethan-Integralschaumstoffe gegebenenfalls eingesetzt werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew-Teile und insbesondere 0,5 bis 2,0 Gew.-Teile, bezogen auf 100 Gew.-Teile der Polyoxyalkylen-polyole.
   Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (c) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.
   Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.
f) Der Reaktionsmischung zur Herstellung der zähelastischen Polyurethan-Integralschaumstoffe können gegebenenfalls auch noch in der Polyurethanchemie übliche Hilfsmittel und/oder Zusatzstoffe (f) einverleibt werden. Genannt seien beispielsweise Schaumstabilisatoren, Füllstoffe, Farbstoffe, Pigmente, Flammschutzmittel, Hydrolyseschutzmittel, fungistatische und bakteriostatisch wirkende Substanzen.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1., 2. und 3. Auflage, 1966, 1983 und 1993 zu entnehmen.

Zur Herstellung der zähelastischen Polyurethan-Integralschaumstoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) vorzugsweise 0,9 bis 1,15:1 beträgt.

Die zähelastischen Polyurethan-Integralschaumstoffe werden vorteilhafterweise nach dem one shot-Verfahren oder Prepolymerverfahren mit Hilfe der Hochdruck- oder Niederdruck-Technik in offenen oder geschlossenen Formwerkzeugen, beispielsweise metallischen Formwerkzeugen, oder freiverschäumt (Ortschaum) hergestellt. Als besonders vorteilhaft hat es sich erwiesen, nach dem Zweikomponenten-Verfahren zu arbeiten und die Aufbaukomponenten (b), (d) und gegebenenfalls (c), (e) und (f) in der Komponente (A) zu vereinigen und als Komponente (B) die organischen und/oder modifizierten organischen Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und im Falle der Herstellung von Formschaumstoffen in das offene oder in das geschlossene Formwerkzeug eingebracht. Die Formwerkzeugtemperatur beträgt zweckmäßigerweise 20 bis 110°C, vorzugsweise 30 bis 60°C und insbesondere 45 bis 50°C.

Die nach dem erfindungsgemäßen Verfahren hergestellten zähelastischen Polyurethan-Integralschaumstoffe weisen eine Dichte von 600 bis 1.100 kg/m³, vorzugsweise von 700 bis 800 kg/m³ auf. Sie haben einen zelligen Kern und eine verdichtete Randzone.

Die erfindungsgemäßen zähelastischen Polyurethan-Integralschaumstoffe weisen
eine Weiterreißfestigkeit von mindestens 22 N/mm, vorzugsweise von 22 bis 26 N/mm, bestimmt nach DIN 53507,
eine Bruchdehnung von mindestens 27 %, vorzugsweise von 27 bis 50 %, bestimmt nach DIN 53504, und
eine Zugfestigkeit von mindestens 6,8 N/mm², vorzugsweise von 6,8 bis 8,0 N/mm², bestimmt nach DIN 53504,
auf.

Die nach dem erfindungsgemäßen Verfahren hergestellten zähelastischen Polyurethan-Integralschaumstoffe sind für alle für zähelastische Polyurethan-Integralschaumstoffe üblichen Anwendungen geeignet. Insbesondere eingesetzt werden sie für Bierfaßumhüllungen.

Die Erfindung wird in den nachfolgenden Ausführungsbeispielen näher erläutert.

### Beispiel 1 (Vergleichsbeispiel):

### A-Komponente

Mischung aus:
- 63,51: Gew.-Teilen eines mit Glycerol gestarteten Polyoxypropylen-polyoxyethylen-polyols mit der OHZ 35 mg KOH/g,
- 9,6: Gew.-Teilen eines mit Propylenglykol gestarteten Polyoxypropylen-polyoxyethylen-polyols mit der OHZ 29 mg KOH/g,
- 17,95: Gew.-Teilen eines Ethylendiamin gestarteten Polyoxypropylenpolyols mit der OHZ 740 mg KOH/g,
- 0,98: Gew.-Teilen einer 33 gew.-%igen Lösung von Dabco in Dipropylenglykol,
- 4,86: Gew.-Teilen Tris(2-Chlorisopropyl)phosphat (TCPP),
- 0,5: Gew.-Teilen Wasser und
- 2,60: Gew.-Teilen Farbpaste

### B-Komponente:

Urethangruppen enthaltendes Prepolymeres mit einem NCO-Gehalt von 28 %, hergestellt durch Umsetzung von Diphenylmethandiisocyanat/Polyisocyanat mit einem Propylenglykol gestarteten Polyoxypropylen-polyol mit der OHZ 250 mg KOH/g.

100 Gew.-Teile der A-Komponente wurden mit 53 Gew.-Teilen der B-Komponente umgesetzt und es entstand ein zähelastischer Integralschaumstoff mit folgenden Kennwerten:

| | |
|---|---|
| Rohdichte Formkörper [kg/m³]: | 710 |
| Härte [Shore D]: | 40 |
| Zugfestigkeit [N/mm²]: | 6,6 |
| Bruchdehnung [%]: | 26,9 |
| Weiterreißfestigkeit [N/mm]: | 21,1 |

### Beispiel 2 (Herstellung des Recyclatpolyols)

2000 g eines zähelastischen Integralschaumabfalls (Bierfaßumhüllung) wurden bei 205°C in ein Gemisch aus 1000 g Diethylenglykol (DEG) und 0,1 Gew.-% Zinn-II-octoat (bezogen auf DEG und Polyurethan-Abfall) so eingetragen, daß der Kolbeninhalt rührfähig blieb. Unter Rühren wurde diese Temperatur 2,5 h beibehalten. Während der Reaktionszeit wurden 12 Gew.-% 2-Ethylhexylglycidether (bezogen auf Menge DEG und Polyurethan-Abfall) gleichmäßig zudosiert.

Anschließend wurde auf 150°C abgekühlt, 3 Gew.-% 2-Ethylhexylglycidether zudosiert und bei dieser Temperatur 0,5 h gefahren. Es wurde eine homogene schwarze Flüssigkeit mit folgenden Kennwerten erhalten:

| | |
|---|---|
| OHZ | 370 mg KOH/g |
| SZ | < 0,1 mg KOH/g |
| Viskosität | 5280 mPa.s |
| MDA-Gehalt | < 0,1 % |

### Beispiel 3

### A-Komponente

Mischung aus:
- 30: Gew.-Teilen Recyclatpolyol, hergestellt gemäß Beispiel 2 aus Integralschaumstoffabfällen (Bierfaßumhüllungen) mit der OHZ 370 mg KOH/g,
- 52,40: Gew.-Teilen eines mit Glycerol gestarteten Polyoxypropylen-polyoxyethylen-polyols mit der OHZ 35 mg KOH/g,
- 10,20: Gew.-Teilen eines mit Propylenglykol gestarteten Polyoxypropylen-polyoxyethylen-polyols mit der OHZ 29 mg KOH/g,
- 6,0: Gew.-Teilen eines Ethylendiamin gestarteten Polyoxypropylenpolyols mit der OHZ 740 mg KOH/g,
- 0,90: Gew.-Teilen einer 33 gew.-%igen Lösung von Dabco in Dipropylenglykol und
- 0,5: Gew.-Teilen Wasser.

### B-Komponente: analog Beispiel 1

100 Gew.-Teile der A-Komponente wurden mit 57,3 Gew.-Teilen der B-Komponente umgesetzt und es entstand ein zähelastischer Integralschaumstoff mit folgenden Kennwerten:

| | |
|---|---|
| Rohdichte Formkörper [kg/m³]: | 730 |
| Härte [Shore D]: | 39 |
| Zugfestigkeit [N/mm²]: | 7,9 |
| Bruchdehnung [%]: | 32,4 |
| Weiterreißfestigkeit [N/mm]: | 25,1 |

### Beispiel 4

### A-Komponente

Mischung aus:
- 39: Gew.-Teilen Recyclatpolyol, hergestellt gemäß Beispiel 2 aus Integralschaumstoffabfällen (Bierfaßumhüllungen) mit der OHZ 370 mg KOH/g,
- 48,9: Gew.-Teilen eines mit Glycerol gestarteten Polyoxypropylen-polyoxyethylen-polyols mit der OHZ 35 mg KOH/g,
- 10,7: Gew.-Teilen eines mit Propylenglykol gestarteten Polyoxypropylen-polyoxyethylen-polyols mit der OHZ 29 mg KOH/g, 0,9 Gew.-Teilen einer 33 gew.-%igen Lösung von Dabco in Dipropylenglykol und
- 0,5: Gew.-Teilen Wasser.

### B-Komponente: analog Beispiel 1

100 Gew.-Teile der A-Komponente wurden mit 54 Gew.-Teilen der B-Komponente umgesetzt und es entstand ein zähelastischer Integralschaumstoff mit folgenden Kennwerten:

| | |
|---|---|
| Rohdichte Formkörper [kg/m³]: | 700 |
| Härte [Shore D]: | 41 |
| Zugfestigkeit [N/mm²]: | 7,0 |
| Bruchdehnung [%]: | 49,6 |
| Weiterreißfestigkeit [N/mm]: | 23,8 |

## Patentansprüche

1. Verfahren zur Herstellung von zähelastischen Polyurethan-Integralschaumstoffen mit verbesserter Weiterreißfestigkeit, Bruchdehnung und Zugfestigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Katalysatoren,
e) gegebenenfalls Treibmitteln
f) sowie gegebenenfalls weiteren Hilfsmitteln und/oder Zusatzstoffen,
dadurch gekennzeichnet, daß als Komponente b) mindestens ein Recyclatpolyol, welches durch Glykolyse von zähelastischen Polyurethan-Integralschaumstoffen unter Verwendung von Glycidethern entsteht, eingesetzt wird.

2. Verfahren nach Anspruch 1, dadurch gekennzeichnet, daß das Recyclatpolyol in einem Anteil von mindestens 30 Gew.-%, bezogen auf die Gesamtmenge der Komponente b), eingesetzt wird.

3. Verfahren nach Anspruch 1 oder 2, dadurch gekennzeichnet, daß bei der Herstellung der Recyclatpolyole mono- und/oder difunktionelle Glycidether verwendet werden.

4. Verfahren nach einem der Ansprüche 1 bis 3, dadurch gekennzeichnet, daß das eingesetzte Recyclatpolyol aminarm ist.

5. Zähelastische Polyurethan-Integralschaumstoffe mit verbesserter Weiterreißfestigkeit, Bruchdehnung und Zugfestigkeit, erhältlich durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Katalysatoren,
e) gegebenenfalls Treibmitteln
f) sowie gegebenenfalls weiteren Hilfsmitteln und/oder Zusatzstoffen,
dadurch gekennzeichnet, daß als Komponente b) mindestens ein Recyclatpolyol, welches durch Glykolyse von zähelastischen Polyurethan-Integralschaumstoffen unter Verwendung von Glycidethern entsteht, eingesetzt wird.

6. Zähelastische Polyurethan-Integralschaumstoffe nach Anspruch 5 dadurch gekennzeichnet, daß das Recyclatpolyol in einem Anteil von mindestens 30 Gew.-%, bezogen auf die Gesamtmenge der Komponente b), eingesetzt wird.

7. Zähelastische Polyurethan-Integralschaumstoffe nach einem der Ansprüche 5 oder 6, dadurch gekennzeichnet, daß die Schaumstoffe eine Weiterreißfestigkeit von mindestens 22 N/mm² aufweisen.

8. Zähelastische Polyurethan-Integralschaumstoffe nach einem der Ansprüche 5 oder 6, dadurch gekennzeichnet, daß die Schaumstoffe eine Bruchdehnung von mindestens 27 % aufweisen.

9. Zähelastische Polyurethan-Integralschaumstoffe nach einem der Ansprüche 5 oder 6, dadurch gekennzeichnet, daß die Schaumstoffe eine Zugfestigkeit von mindestens 6,8 N/mm² aufweisen.

10. Verwendung der zähelastischen Polyurethan-Integralschaumstoffe gemäß einem der Ansprüche 5 bis 9 als Bierfaßumhüllung.
